# DEMANDE DE BREVET EUROPEEN

(11) **EP 1 669 672 A1**
(43) Date de publication de la demande: **14.06.2006**
(21) Numéro de dépôt: 05292315.8
(22) Date de dépôt: 02.11.2005
(51) Int. Cl.: F23N 1/00

(54) **Appareil de chauffage à convection avec alimentation électrique autonome du ventilateur**

(30) Priorité: 07.12.2004 FR 0412994
(71) Demandeur: Compagnie des Gaz de Pétrole Primagaz, Société Anonyme, 75017 Paris (FR)
(72) Inventeur: Bouvier, Daniel, 75011 Paris (FR)
(74) Mandataire: Eidelsberg, Olivier Nathan

(57) **Abrégé**

Dispositif de chauffage comprenant une source (4) de chaleur, un élément (5, 6) de transmission de la chaleur provenant de la source (4), un thermoélément (8) apte à produire du courant électrique lorsque la différence de température entre l'une de ses faces chaude et l'autre face froide est comprise entre une valeur minimum et une valeur maximum, la face chaude étant disposée de manière à recevoir de la chaleur de l'élément (5, 6) de transmission, un groupe (12, 14) motoventilateur dont le moteur (15) électrique est alimenté en courant par le thermoélément (8) et un échangeur de chaleur (9) en relation d'échange thermique avec la face froide du thermoélément (8) pour la refroidir, ayant une entrée (11) et une sortie (13) pour de l'air mis en mouvement par le ventilateur (12), caractérisé en ce que le ventilateur (11) du groupe motoventilateur (12, 15) est monté à l'entrée (11) de l'échangeur de chaleur (9).

## Description

La présente invention se rapporte aux dispositifs de chauffage , et plus précisément, aux dispositifs de chauffage munis d'un ventilateur pour mettre de l'air en mouvement.

Au brevet des Etats-Unis d'Amérique n ° 5 544 488, on décrit déjà un dispositif de chauffage comprenant une source de chaleur, un élément de transmission de la chaleur provenant de la source, un thermoélément apte à produire du courant électrique lorsque la différence de température entre l'une de ses faces chaude et l'autre face froide dépasse une valeur donnée, la face chaude étant disposée de manière à recevoir de la chaleur de l'élément de transmission, un groupe motoventilateur dont le moteur électrique est alimenté en courant par le thermoélément et un échangeur de chaleur en relation d'échange thermique avec la face froide du thermoélément pour le refroidir, ayant une entrée et une sortie pour de l'air mis en mouvement par le ventilateur. Ce dispositif de chauffage est entièrement autonome, puisqu'il produit soi-même le courant électrique nécessaire à l'alimentation du moteur du groupe motoventilateur. On peut donc l'utiliser pour se chauffer dans des endroits où il n'y a pas d'accessibilité au réseau électrique. L'expérience montre toutefois que ce dispositif de chauffage n'est pas en mesure de porter à des températures assez hautes, de grandes quantités d'air à une vitesse élevée. Or, la vitesse élevée d'un flux d'air sensiblement horizontal permet d'homogénéiser la température d'une pièce et de chauffer à peu près aussi bien la partie basse que la partie haute d'une pièce. En outre, le rendement est médiocre et surtout le fonctionnement n'est pas stable.

Au JP 620981149 A, on décrit un appareil suivant le préambule de la revendication 1. L'invention vise à mieux utiliser la chaleur de la source de chaleur pour le chauffage.

L'invention vise un dispositif de chauffage autonome grâce à la présence d'un thermoélément, dans lequel il est donné au flux d'air réchauffé, destiné à chauffer une pièce, un grand débit et surtout une grande vitesse, notamment dans la direction horizontale, tout en ayant un rendement thermique meilleur et une très bonne stabilité de fonctionnement.

On y parvient, suivant l'invention, par un dispositif de chauffage défini à la revendication 1. Le brûleur peut être à combustible solide ou liquide. Ce peut être notamment un brûleur à propane ou à butane. Cela augmente le rendement thermique du dispositif de chauffage de la pièce. La chaleur des produits de combustion est utilisée au mieux pour le chauffage.

Le ventilateur fonctionne en refoulement. Ce mode de fonctionnement permet d'atteindre en surpression de grandes vitesses et par conséquent d'améliorer le transfert thermique entre le flux d'air et l'échangeur. Cette grande vitesse permet non seulement de mieux chauffer la pièce, mais aussi et surtout de mieux refroidir la face froide du thermoélément. Grâce à ce refroidissement excellent, le rendement de l'ensemble du dispositif de chauffage et sa stabilité de fonctionnement sont grandement améliorés. Le ventilateur contribue à bien refroidir la face froide, refroidissement qui est une condition essentielle à une production stable du courant électrique qui l'alimente. Le ventilateur est plus efficace non seulement pour le chauffage de la pièce, mais aussi pour le maintien de la différence de température entre la face chaude et la face froide du thermoélément, ce maintien de la différence de température retentissant à son tour sur l'alimentation en courant électrique du ventilateur, qui est mieux assurée, gage de la stabilité du fonctionnement du dispositif de chauffage dans son ensemble.

De préférence, le ventilateur est entouré d'un caisson dont le bord inférieur est fixé à l'échangeur de chaleur, le caisson forme ainsi carénage et fait que l'ensemble du flux d'air refoulé par le ventilateur passe tout entier pratiquement dans l'échangeur de chaleur. Cela permet en outre de bien diriger l'air dans la ou les directions choisies, notamment lorsque comme cela est préféré, l'échangeur de chaleur est un échangeur de chaleur à ailettes, notamment verticales.

La différence de température entre la face chaude et la face froide à maintenir pour avoir une production de courant électrique est comprise entre 90 et 150° C. La face froide peut être de préférence à une température de 30 à 40° C, tandis que la face chaude est portée à une température de 130 à 210° C, de préférence entre 150° et 190° C.

Le thermoélément est un module thermoélectrique, dit à effet Seebeck. Ce module thermoélectrique est constitué d'un réseau de couples semiconducteurs (pastilles PN) montées électriquement en série et thermiquement en parallèle pris en sandwich entre des substrats céramiques métallisés. On peut trouver des thermoéléments de ce type chez la Société Melcor, Frigicheaps, Etats-Unis d'Amérique et chez la Société Tellurex Corporation, Michigan, Etats-Unis d'Amérique.

Aux dessins annexés, donnés uniquement à titre d'exemple :
la figure 1 est une vue schématique d'un dispositif de chauffage suivant l'invention, et
la figure 2 en est une vue partielle éclatée en perspective.

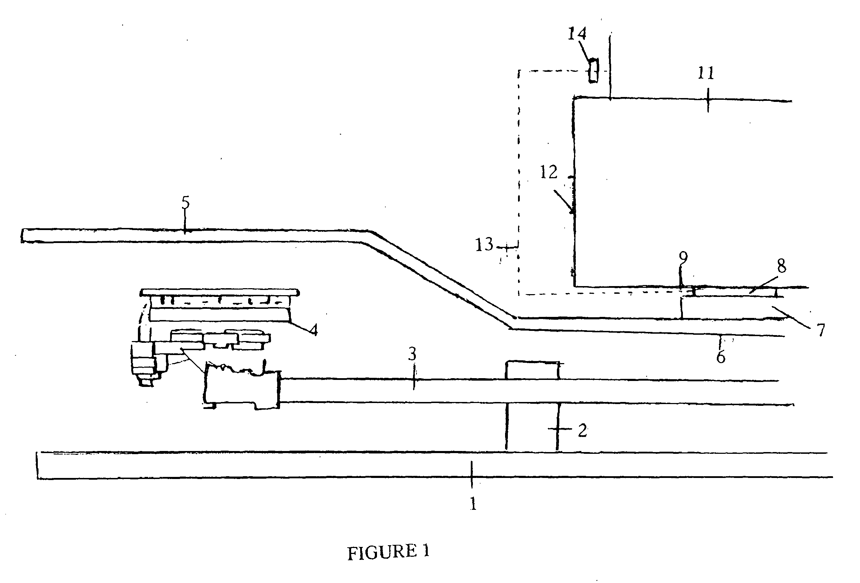

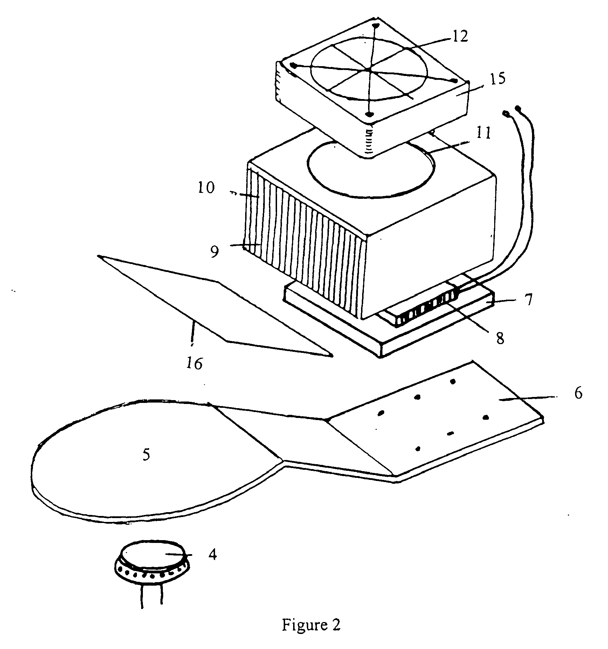

Le dispositif de chauffage représenté à la figure 1 comprend un bâti 1 duquel part un plot 2 de pose d'un tuyau 3 de gaz alimentant un brûleur 4 à butane. Au-dessus du brûleur 4, est placé un élément de transmission de la chaleur comprenant une partie 5 circulaire prolongée par une patte 6 rectangulaire. Au dessus de la patte 6 est vissée une plaque 7 de fixation d'un thermoélément 8. La face du thermoélément 8 en contact avec la patte 6 par l'intermédiaire de la plaque 7 est la face chaude, tandis que la face opposée en est la face froide. Cette face froide supérieure aux dessins est en contact intime d'échange de chaleur avec le fond 9 d'un échangeur de chaleur à ailettes 10 (Figure 2). L'échangeur de chaleur comporte une entrée 11 dirigée vers le haut et devant laquelle est monté un ventilateur 12. L'échangeur de chaleur comporte aussi, formée par les ailettes 10, une sortie 13.

Le thermoélément 8 est relié par une ligne 14 électrique au moteur 15 du ventilateur 11.

Comme représenté à la figure 2, le ventilateur 12 comporte un caisson 16 de carénage, dont le bord inférieur est fixé au bord supérieur des ailettes 10.

La sortie 13 est dirigée horizontalement de sorte que le flux d'air qui en sort vient lécher la face supérieure de la partie 5 et entraîne les produits de combustion du brûleur 4.

Le dispositif de chauffage fonctionne de la manière suivante : la chaleur produite par le brûleur 4 échauffe l'élément de transmission de la chaleur 5 et 6 en sorte que la plaque 7 se réchauffe et donne à la face inférieure du thermoélément 8, une température plus haute que celle de la face supérieure. La face supérieure du thermoélément 8 est en effet refroidie par l'air refoulé par le ventilateur 12 à partir de l'entrée 11 vers la sortie 13.

Comme le ventilateur 12 refoule , il donne à l'air qui passe entre les ailettes 10 de l'échangeur de chaleur, une grande vitesse permettant de bien refroidir la face supérieure dite froide du thermoélément 8 et garantissant ainsi que celui-ci alimente bien en courant électrique le moteur 15 du ventilateur 12. En outre, cette grande vitesse de refoulement permet d'obtenir un mélange particulièrement bon de l'air refoulé sortant par la sortie 13 avec les produits de combustion s'élevant du brûleur 4 et passant autour de la partie 5.

## Revendications

1. Dispositif de chauffage comprenant une source (4) de chaleur, un élément (5, 6) de transmission de la chaleur provenant de la source (4), un thermoélément (8) apte à produire du courant électrique lorsque la différence de température entre l'une de ses faces chaude et l'autre face froide est comprise entre une valeur minimum et une valeur maximum, la face chaude étant disposée de manière à recevoir de la chaleur de l'élément (5, 6) de transmission, un groupe (12, 15) motoventilateur dont le moteur (15) électrique est alimenté en courant par le thermoélément (8) et un échangeur de chaleur (9, 10) en relation d'échange thermique avec la face froide du thermoélément (8) pour la refroidir, ayant une entrée (11) et une sortie (13) pour de l'air mis en mouvement par le ventilateur (12), **caractérisé en ce que** la sortie (13) de l'échangeur de chaleur (9, 10) est dirigée de façon à ce que le flux d'air qui en sort se mélange aux produits de combustion de la source (4) de chaleur, qui est constituée sous la forme d'un brûleur à feu nu.

2. Dispositif de chauffage suivant la revendication 1, **caractérisé en ce que** le ventilateur (11) est entouré d'un caisson (16) de carénage, dont le bord inférieur est fixé à l'échangeur de chaleur (9, 10).

3. Dispositif suivant la revendication 1 ou 2, **caractérisé en ce qu'**il est prévu un élément de transmission de la chaleur comprenant une partie (5) qui est au-dessus de la source (4) et qui est prolongée par une patte (6) au-dessus de laquelle se trouve le thermoélément (8).
